# EUROPEAN PATENT APPLICATION

(11) **EP 4 527 669 A1**
(43) Date of publication of application: **26.03.2025**
(21) Application number: 23806990.0
(22) Date of filing: 17.05.2023
(51) Int. Cl.: B60L 15/20, B60W 30/18

(54) **VEHICLE TRACKSLIP IDENTIFICATION METHOD, VEHICLE TRACKSLIP PROCESSING APPARATUS, AND VEHICLE**

(30) Priority: 20.05.2022 CN 202210556572
(71) Applicant: BYD Company Limited, Shenzhen, Guangdong 518118 (CN)
(72) Inventor: LING, Heping, Shenzhen, Guangdong 518118 (CN); SHI, Mingchuan, Shenzhen, Guangdong 518118 (CN); LI, Pengxiang, Shenzhen, Guangdong 518118 (CN); YIN, Chao, Shenzhen, Guangdong 518118 (CN); ZHOU, Guixin, Shenzhen, Guangdong 518118 (CN)
(74) Representative: Mathys & Squire
(86) International application number: PCT/CN2023/094790
(87) International publication number: WO 2023/222039

(57) **Abstract**

A vehicle trackslip identification method, a vehicle trackslip processing apparatus, and a vehicle. The vehicle trackslip identification method comprises: acquiring the rotating speeds of two drive motors of a vehicle, wherein the higher rotating speed is a first rotating speed, the corresponding angular acceleration is a first angular acceleration, the lower rotating speed is a second rotating speed, and the corresponding angular acceleration is a second angular acceleration; and if the first angular acceleration is greater than 0, at least according to the first rotating speed, the second rotating speed, the first angular acceleration and the second angular acceleration, determining the trackslip trend of the drive motor corresponding to the first rotating speed. The driving state of a vehicle is identified by means of a rotating speed and an angular acceleration of an electric motor, making the real-time performance and accuracy of determination higher.

## Description

### CROSS-REFERENCE TO RELATED APPLICATIONS

The present disclosure claims priority to and benefits of Chinese Patent Application No. CN202210556572.2, filed on May 20, 2022 and entitled "VEHICLE TRACKSLIP IDENTIFICATION METHOD, VEHICLE TRACKSLIP PROCESSING APPARATUS, AND VEHICLE". The entire content of the above-referenced application is incorporated herein by reference.

### FIELD

The present disclosure relates to the field of vehicle controlling technologies, and more specifically, to a method for vehicle trackslip identification, a processing apparatus, and a vehicle.

### BACKGROUND

During driving of a vehicle, output torques for wheels greatly affect stability of the driving of the vehicle. Particularly, when the vehicle is driving on a road with a relatively low road adhesion coefficient or an uneven adhesion coefficient, if the output torques for the wheels are inappropriate, a phenomenon such as a significant jitter, shake, or trackslip may be caused during the driving of the vehicle. For an electric vehicle, output torques of motors may be adjusted, thereby improving stability of driving of the vehicle. An appropriate power output is related to a current driving status of the vehicle. The trackslip phenomenon is a situation that can easily cause a safety threat to the driving of the vehicle. Currently, in the field, whether the vehicle has a trackslip is identified by monitoring a rotating speed of a wheel. However, the identification method is unreliable. It often occurs that when the vehicle has a significant trackslip, a vehicle control system detects the trackslip phenomenon.

The problem severely affects safety and comfort during the driving of the vehicle, and there is a need for improvement.

### SUMMARY

An objective of the present disclosure is to provide an optimized method for vehicle trackslip identification.

According to a first aspect of the present disclosure, a method for vehicle trackslip identification is provided. The method for vehicle trackslip identification includes the following steps.

Rotating speeds of two drive motors of a vehicle are acquired. A higher rotating speed is a first rotating speed, and an angular acceleration corresponding to the higher rotating speed is a first angular acceleration. A lower rotating speed is a second rotating speed, and an angular acceleration corresponding to the lower rotating speed is a second angular acceleration.

If the first angular acceleration is greater than 0, a trackslip trend of a drive motor corresponding to the first rotating speed is determined according to at least the first rotating speed, the second rotating speed, the first angular acceleration, and the second angular acceleration.

Optionally, that a trackslip trend of a drive motor corresponding to the first rotating speed is determined according to at least the first rotating speed, the second rotating speed, the first angular acceleration, and the second angular acceleration includes:

A ratio of the first rotating speed to the second rotating speed is calculated as a rotating speed ratio. An absolute value of a ratio of the first angular acceleration to the second angular acceleration is calculated as an angular acceleration ratio.

The trackslip trend of the drive motor corresponding to the first rotating speed is determined according to at least the rotating speed ratio and the angular acceleration ratio.

Optionally, that the trackslip trend of the drive motor corresponding to the first rotating speed is determined according to at least the rotating speed ratio and the angular acceleration ratio includes: The trackslip trend of the drive motor corresponding to the first rotating speed is determined according to at least whether the rotating speed ratio exceeds a preset rotating speed ratio threshold range and whether the angular acceleration ratio exceeds a preset angular acceleration ratio threshold range.

Optionally, torques of the two drive motors of the vehicle are acquired. A torque corresponding to the first rotating speed is a first torque. A torque corresponding to the second rotating speed is a second torque.

The trackslip trend of the drive motor corresponding to the first rotating speed is determined based on a relationship between the first torque and the second torque.

Optionally, if the first torque is greater than the second torque, the rotating speed ratio exceeds the rotating speed ratio threshold range, and the angular acceleration ratio exceeds the angular acceleration ratio threshold range, it is determined that the drive motor corresponding to the first rotating speed has the trackslip trend.

Optionally, if the second torque is greater than the first torque, a ratio of the second torque to the first torque is a torque ratio.

If a ratio of the angular acceleration ratio to the torque ratio exceeds an angular acceleration torque ratio threshold range and the rotating speed ratio exceeds the rotating speed ratio threshold range, it is determined that the drive motor corresponding to the first rotating speed has the trackslip trend.

Optionally, if the first torque is greater than the second torque, a ratio of the first torque to the second torque is a torque ratio. If the second torque is greater than the first torque, a ratio of the second torque to the first torque is a torque ratio.

If the torque ratio falls within a torque ratio threshold range and the rotating speed ratio exceeds the rotating speed ratio threshold range, the trackslip trend of the drive motor corresponding to the first rotating speed is determined based on a ratio of the angular acceleration ratio to the torque ratio.

Optionally, if the ratio of the angular acceleration ratio to the torque ratio exceeds the angular acceleration torque ratio threshold range, it is determined that the drive motor corresponding to the first rotating speed has the trackslip trend.

Optionally, the first rotating speed and the second rotating speed are acquired through a motor resolver sensor.

According to a second aspect of the present disclosure, a method for vehicle torque adjustment is further provided. The method for vehicle torque adjustment includes the following steps.

By using the method for vehicle trackslip identification according to the first aspect of the present disclosure, it is determined whether the drive motor corresponding to the first rotating speed has the trackslip trend.

If the drive motor corresponding to the first rotating speed has the trackslip trend, a torque output value of the drive motor corresponding to the first rotating speed is reduced.

Optionally, that a torque output value of the drive motor corresponding to the first rotating speed is reduced includes:

The torque output value of the drive motor corresponding to the first rotating speed is reduced to a negative torque.

Optionally, that a torque output value of the drive motor corresponding to the first rotating speed is reduced includes:

The torque output value of the drive motor corresponding to the first rotating speed is reduced. A torque output value of a drive motor corresponding to the second rotating speed is increased.

Optionally, by using the method for vehicle trackslip identification according to the first aspect of the present disclosure, an output torque at a moment when the drive motor corresponding to the first rotating speed has the trackslip trend is recorded. The output torque is used as a maximum torque reference value under a current road adhesion condition.

The torque output value of the drive motor corresponding to the first rotating speed is adjusted according to the maximum torque reference value.

The present disclosure provides a processing apparatus. The processing apparatus uses the method for vehicle trackslip identification according to the first aspect. The processing apparatus includes the following modules.

A signal collection module is configured to at least acquire rotating speeds of two drive motors of a vehicle.

A determining module acquires a rotating speed ratio and an angular acceleration ratio, and determines a trackslip trend of a drive motor corresponding to a first rotating speed according to at least the rotating speed ratio and the angular acceleration ratio.

The present disclosure provides a processing apparatus. The processing apparatus uses the method for vehicle torque adjustment according to the second aspect. The processing apparatus includes the following modules.

A signal collection module is configured to at least acquire rotating speeds of two drive motors of a vehicle.

A determining module acquires a rotating speed ratio and an angular acceleration ratio, and determines a trackslip trend of a drive motor corresponding to a first rotating speed according to at least the rotating speed ratio and the angular acceleration ratio.

A torque adjustment module is configured to reduce a torque output value of the drive motor corresponding to the first rotating speed.

The present disclosure further provides a vehicle. The vehicle includes the foregoing processing apparatus using the method for vehicle torque adjustment, configured to perform the method for vehicle torque adjustment according to the foregoing second aspect.

Alternatively, the vehicle includes the foregoing processing apparatus using the method for vehicle trackslip identification, configured to perform the method for vehicle trackslip identification according to the foregoing first aspect.

The present disclosure further provides a computer-readable storage medium. The computer-readable storage medium stores computer programs. The computer programs, when executed, implement the foregoing method for vehicle trackslip identification.

Alternatively, the computer programs, when executed, implement the foregoing method for vehicle torque adjustment.

A technical effect of the present disclosure is that a driving status of the vehicle is identified based on the rotating speeds and the angular accelerations of the motors, making real-time performance and accuracy of the determining high. In technical solutions of the present disclosure, the trackslip trend during driving of the vehicle can be predicted in time, which is more conducive to timely intervention and controlling on the vehicle.

Other features and advantages of the present disclosure will become apparent from the following detailed description of exemplary embodiments of the present disclosure with reference to the drawings.

### BRIEF DESCRIPTION OF THE DRAWINGS

Drawings constitute a part of the specification, describe embodiments of the present disclosure, and are used together with the specification to describe the principle of the present disclosure.
FIG. 1 is a schematic diagram of a method for vehicle trackslip identification;
FIG. 2 is a schematic diagram of a method for vehicle torque adjustment;
FIG. 3 is a schematic diagram of a processing apparatus using a method for vehicle trackslip identification; and
FIG. 4 is a schematic diagram of a processing apparatus using a method for vehicle torque adjustment.

### DETAILED DESCRIPTION

Various exemplary embodiments of the present disclosure are now described in detail with reference to the drawings. It should be noted that, unless otherwise specified, opposite arrangement, numerical expressions, and numerical values of components and steps described in the embodiments do not limit the scope of the present disclosure.

In fact, the following descriptions of at least one exemplary embodiment are merely illustrative, and in no way constitute any limitation on the present disclosure and application or use of the present disclosure.

Technologies and devices known to those of ordinary skill in related arts may not be discussed in detail, but when appropriate, the techniques and the devices should be considered as a part of the specification.

In all examples shown and discussed herein, any specific value should be construed as merely exemplary and not as limitations. Therefore, other examples of exemplary embodiments may have different values.

It should be noted that, similar reference signs or letters in the drawings indicate similar items. Therefore, once an item is defined in one drawing, the item does not need to be further discussed in the subsequent drawings.

The present disclosure provides a method for vehicle trackslip identification. The method for vehicle trackslip identification may be used to quickly identify a trackslip trend of a vehicle based on rotating speeds of motors and angular accelerations of the motors during driving of the vehicle, thereby improving real-time performance and accuracy of the identification. Particularly, in the present disclosure, rotation statuses of the drive motors are directly detected, and characteristics of more accurate and more real-time detection on the drive motors are used, so that accuracy of detecting a vehicle trackslip is greatly improved, and real-time performance of the detection is improved.

Further, in the present disclosure, timely intervention and controlling may be performed on a drive motor with a trackslip trend based on an identification result, thereby effectively suppressing a drive wheel trackslip phenomenon that occurs when the vehicle starts up or accelerates in complex operating situations such as a low-adhesion road and a separated road, so that the vehicle acquires good ground friction, and stability and driving comfort of the vehicle are improved. In addition, there is no need to add an additional sensor, thereby having advantages of low costs and high identification accuracy.

In an actual operating situation of driving of the vehicle, there is usually no large difference between rotating speeds of drive motors configured to drive different wheels. If the phenomenon occurs, an abnormality exists during the driving of the vehicle. Technical solutions of the present disclosure are described in the present disclosure by using a situation in which the vehicle has at least two drive motors respectively configured to drive wheels on front and rear axles as an example. In other implementations, the vehicle may alternatively have more drive motors respectively configured to drive different wheels.

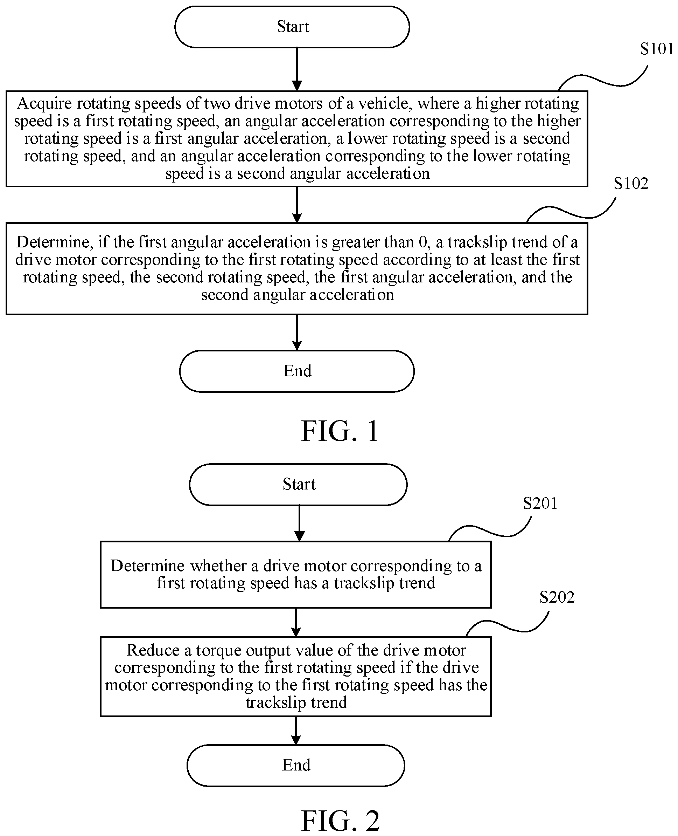

As shown in FIG. 1, the present disclosure provides a method for vehicle trackslip identification. The method for vehicle trackslip identification includes the following steps.

S101: Rotating speeds of two drive motors of a vehicle are acquired. A higher rotating speed is a first rotating speed, and an angular acceleration corresponding to the higher rotating speed is a first angular acceleration. A lower rotating speed is a second rotating speed, and an angular acceleration corresponding to the lower rotating speed is a second angular acceleration.

The two drive motors may be a front motor driving a front axle and a rear motor driving a rear axle respectively. The front motor and the rear motor may be the same type of motor or different types of motors.

S102: If the first angular acceleration is greater than 0, a trackslip trend of a drive motor corresponding to the first rotating speed is determined according to at least the first rotating speed, the second rotating speed, the first angular acceleration, and the second angular acceleration.

In Step S101, rotating angular speeds of the two drive motors are detected, so that two rotating speed signals may be acquired. An angular speed of the motor with the higher rotating speed is a first rotating speed ω₁. An angular speed of the other motor with the lower rotating speed is a second rotating speed ω₂. The angular acceleration corresponding to the first rotating speed ω₁ is a first angular acceleration α₁. The angular acceleration corresponding to the second rotating speed ω₂ is a second angular acceleration α₂. In the technical solution of the present disclosure, a trackslip situation of the vehicle is identified based on the foregoing four parameters.

In Step S102, it is first determined whether the first angular acceleration α₁ is greater than 0. If α₁ is greater than 0, it indicates that the drive motor corresponding to α₁ has an accelerating trend. Further, a trackslip trend of the drive motor corresponding to the first rotating speed ω₁, namely, the trackslip trend of the drive motor with the higher rotating speed is determined based on at least the four parameters: ω₁, ω₂, α₁, and α₂.

Optionally, a ratio of the first rotating speed ω₁ to the second rotating speed ω₂ is at least calculated, and denoted as a rotating speed ratio SpdDivid. An absolute value of a ratio of the first angular acceleration α₁ to the second angular acceleration α₂ is calculated, and denoted as an angular acceleration ratio SpdDerivDivid. The trackslip trend of the drive motor corresponding to the first rotating speed is determined according to the rotating speed ratio and the angular acceleration ratio.

The rotating speed ratio and the angular acceleration ratio are calculated, so that a phenomenon such as a signal misjudgment caused by overall excessively large or excessively small absolute values of parameters such as ω₁ and ω₂ can be excluded, and an angular speed relationship and an angular acceleration relationship between the two drive motors can be reflected more realistically. The trackslip trend can be determined more accurately based on the rotating speed ratio and the angular acceleration ratio.

Optionally, a rotating speed ratio threshold range may be preset, and denoted as: A1<SpdDivid<A2. If the rotating speed ratio meets the foregoing rotating speed ratio threshold range, it may be considered that ω₁ and ω₂ have no large difference and fall within a relatively stable rotating speed difference range. If the rotating speed ratio exceeds the foregoing rotating speed ratio threshold range, ω₁ and ω₂ have a large difference, a trackslip risk exists, and the trackslip trend may be further determined based on other parameter relationships.

An angular acceleration ratio threshold range may be further preset, and denoted as: SpdDerivDivid>C1. If the angular acceleration ratio is greater than the angular acceleration ratio threshold range, it indicates that α₁ is significantly greater than α₂. In the situation, ω₁ and ω₂ have a large difference, and ω₁ is greater than ω₂. Further, α₁ is significantly greater than α₂. It can be seen that, the drive motor corresponding to ω₁ has a trend of rotating faster. Based on this, the trackslip trend of the drive motor corresponding to the first rotating speed ω₁ may be determined.

In a further technical solution of the present disclosure, the trackslip trend of the drive motor corresponding to the first rotating speed ω₁ may be further determined more accurately according to a torque relationship between the two motors.

Optionally, torques of the two drive motors of the vehicle are acquired. A torque corresponding to the first rotating speed is a first torque T₁. A torque corresponding to the second rotating speed is a second torque T₂. The trackslip trend of the drive motor corresponding to the first rotating speed is determined based on a relationship between the first torque T₁ and the second torque T₂. In some special situations, although the first rotating speed ω₁ is greater than the second rotating speed ω₂, performance of the first torque T₁ and the second torque T₂ does not exactly meet a trackslip situation. Therefore, the trackslip situation may be further determined according to the relationship between the torques.

Optionally, if the first torque T₁ is greater than the second torque T₂, the rotating speed ratio exceeds the rotating speed ratio threshold range, and the angular acceleration ratio exceeds the angular acceleration ratio threshold range, it may be determined that the drive motor corresponding to the first rotating speed ω₁ has the trackslip trend. In the situation, the drive motor corresponding to the first rotating speed ω₁ has a clear trend of accelerating rotation, and the first torque T₁ corresponding to the first rotating speed ω₁ is larger. In this case, it may be determined more accurately that the motor corresponding to the first rotating speed ω₁ has the trackslip trend.

Optionally, in another situation, if the second torque T₂ is greater than the first torque T₁, a ratio of the second torque to the first torque may be set as a torque ratio. In other words, the torque ratio is a value greater than 1. If the second torque T₂ is greater than the first torque T₁, it indicates that the vehicle is not necessarily in an accelerating state, or a road situation is relatively complex. To improve reliability of determining a trackslip state of the drive motor in the present disclosure, the following determining manner may be further relied on.

An angular acceleration torque ratio threshold range is preset, and denoted as: SpdTorqDivid>C2. A ratio of the angular acceleration ratio to the torque ratio is introduced, and denoted as (α₁/α₂)/(T₂/T₁). If (α₁/α₂)/(T₂/T₁)>C2 and the rotating speed ratio exceeds the rotating speed ratio threshold range, it indicates that the first rotating speed ω₁ is significantly greater than the second rotating speed ω₂. In addition, even if the angular acceleration ratio is corrected for the torques, the angular acceleration ratio is excessively large. In this way, it may be determined that the drive motor corresponding to the first rotating speed has the trackslip trend.

Optionally, in another situation, a torque ratio may be first acquired according to a relationship between the first torque T₁ and the second torque T₂. If the first torque T₁ is greater than the second torque T₂, a ratio of the first torque T₁ to the second torque T₂ is the torque ratio. If the second torque T₂ is greater than the first torque T₁, a ratio of the second torque T₂ to the first torque T₁ is the torque ratio.

In the situation, the torque ratio falls within a torque ratio threshold range. In the technical solution of the present disclosure, the torque ratio threshold range may be preset, and denoted as: B1<TorDivid<B2. If the torque ratio falls within the torque ratio threshold range, it indicates that the first torque T₁ and the second torque T₂ have no large difference. In the situation, if the first rotating speed ω₁ is greater than the second rotating speed ω₂, the trackslip situation of the drive motor corresponding to the first rotating speed ω₁ may be further determined based on an additional condition.

Optionally, according to that the rotating speed ratio exceeds the rotating speed ratio threshold range, a parameter, namely, a ratio of the angular acceleration ratio to the torque ratio may be introduced, and denoted as (α₁/α₂)/(T₂/T₁). Based on the parameter: (α₁/α₂)/(T₂/T₁), the angular acceleration ratio may be corrected based on performance of the torques, so that the trackslip trend of the drive motor corresponding to the first rotating speed is determined.

Further, optionally, an angular acceleration torque ratio threshold range is preset, and denoted as: SpdTorqDivid>C4. In the foregoing situation, if the ratio of the angular acceleration ratio to the torque ratio exceeds the angular acceleration torque ratio threshold range, that is, (α₁/α₂)/(T₂/T₁)>C4, it may be determined that the drive motor corresponding to the first rotating speed has the trackslip trend.

Optionally, in the present disclosure, the first rotating speed and the second rotating speed of the two drive motors are directly acquired through a motor resolver sensor. Based on a high-resolution characteristic of the motor resolver sensor, a small fluctuation can be accurately and effectively identified. Therefore, measurement accuracy of a rotating speed of a motor is faster and higher than that of a wheel speed. In addition, for drive structures of a four-driven vehicle, torques of motor ends are first transmitted to a speed reducer through mechanical transmission, and then transmitted to left and right wheels. A delay occurs in the process. Change trends of wheel speeds of the wheels can be predicted in advance by using the rotating speeds of the motors, which is more conducive to controlling the vehicle. Therefore, in the present disclosure, a driving status of the four-driven vehicle is identified by monitoring changes in the rotating speeds and the torques of the motors, which has better real-time performance and higher accuracy than a conventional method.

The foregoing method for vehicle trackslip identification provided in the present disclosure is further described below through separate implementations.

Parameters applied to specific implementations include the following content:
(1) SpdDiff=ω_{f}-ωᵣ. ω_{f} is a rotating speed of the front motor, and ωᵣ is a rotating speed of the rear motor.
(2) Torqdiff=T_{f}-Tᵣ. T_{f} is a torque of the front motor, and Tᵣ is a torque of the rear motor.
(3) When SpdDiff>0, SpdDivid=ω_{f}/ωᵣ. When SpdDiff<0, SpdDivid=ωᵣ/ω_{f}.
(4) When SpdDiff>0, SpdDerivDivid=α_{f}/αᵣ. When SpdDiff<0, SpdDerivDivid=αᵣ/α_{f}. α_{f} is an angular acceleration of the front motor, and αᵣ is an angular acceleration of the rear motor.
(5) When Torqdiff>0, TorqDivid=T_{f}/Tᵣ. When Torqdiff<0, TorqDivid=Tᵣ/T_{f}.
(6) SpdTorqDivid=SpdDerivDivid/TorDivid.
(7) FMSpdDeriv=α_{f}, and RMSpdDeriv=αᵣ.
(8) When A1<SpdDivid<A2, a flag bit of SpdDivid_Flag is set to 1. Otherwise, the flag bit of SpdDivid_Flag is set to 0.
(9) When B1<TorqDivid<B2, a flag bit of TorqDivid_Flag is set to 1. Otherwise, the flag bit of TorqDivid_Flag is set to 0.

### <Implementation I>

When minimum rotating speeds of the front motor and the rear motor are greater than a threshold C0, actual torques of the front motor and the rear motor are greater than 0, and a rotating speed difference SpdDiff between the front motor and the rear motor is greater than 0 and meets one of the following situations, it may be determined that the front motor has a trackslip trend.

### Implementation 1

The rotating speed difference SpdDiff between the front motor and the rear motor is greater than 0. When a torque difference Torqdiff between the front motor and the rear motor is greater than 0, an acceleration FMSpdDeriv of the front motor is greater than 0, an acceleration RMSpdDeriv of the rear motor is greater than 0, SpdDerivDivid is greater than the threshold C1, and the flag bit of SpdDivid_Flag is set to 0, the front motor has the trackslip trend.

### Implementation 2

The rotating speed difference SpdDiff between the front motor and the rear motor is greater than 0. When a torque difference Torqdiff between the front motor and the rear motor is less than 0, an acceleration FMSpdDeriv of the front motor is greater than 0, an acceleration RMSpdDeriv of the rear motor is greater than 0, SpdTorqDivid is greater than the threshold C2, and the flag bit of SpdDivid_Flag is set to 0, the front motor has the trackslip trend.

### Implementation 3

When a rotating speed ratio SpdDivid between the front motor and the rear motor is greater than a threshold C3, motor acceleration ratio/motor torque ratio SpdTorqDivid is greater than the threshold C4, and the flag bit of TorqDivid_Flag is set to 1, the front motor has the trackslip trend.

### Implementation 4

The rotating speed difference SpdDiff between the front motor and the rear motor is greater than 0. When a torque difference Torqdiff between the front motor and the rear motor is greater than 0, an acceleration FMSpdDeriv of the front motor is greater than 0, an acceleration RMSpdDeriv of the rear motor is less than 0, an absolute value of SpdDerivDivid is greater than a threshold C5, and the flag bit of SpdDivid_Flag is set to 0, the front motor has the trackslip trend.

### <Implementation II>

When minimum rotating speeds of the front motor and the rear motor are greater than a threshold C0, an actual torque of the rear motor is greater than 0, and a rotating speed difference SpdDiff between the front motor and the rear motor is less than 0 and meets one of the following situations, it may be determined that the rear motor has a trackslip trend.

### Implementation 5

The rotating speed difference SpdDiff between the front motor and the rear motor is less than 0. When a torque difference Torqdiff between the front motor and the rear motor is less than 0, an acceleration FMSpdDeriv of the front motor is greater than 0, an acceleration RMSpdDeriv of the rear motor is greater than 0, SpdDerivDivid is greater than a threshold C6, and the flag bit of SpdDivid_Flag is set to 0, the rear motor has the trackslip trend.

### Implementation 6

The rotating speed difference SpdDiff between the front motor and the rear motor is less than 0. When a torque difference Torqdiff between the front motor and the rear motor is greater than 0, an acceleration FMSpdDeriv of the front motor is greater than 0, an acceleration RMSpdDeriv of the rear motor is greater than 0, SpdTorqDivid is greater than a threshold C7, and the flag bit of SpdDivid_Flag is set to 0, the rear motor has the trackslip trend.

### Implementation 7

When a rotating speed ratio SpdDivid between the front motor and the rear motor is greater than a threshold C8, motor acceleration ratio/motor torque ratio SpdTorqDivid is greater than a threshold C9, and the flag bit of TorqDivid_Flag is set to 1, the rear motor has the trackslip trend.

### Implementation 8

The rotating speed difference SpdDiff between the front motor and the rear motor is less than 0. When a torque difference Torqdiff between the front motor and the rear motor is less than 0, an acceleration FMSpdDeriv of the front motor is less than 0, an acceleration RMSpdDeriv of the rear motor is greater than 0, an absolute value of SpdDerivDivid is greater than a threshold C10, and the flag bit of SpdDivid_Flag is set to 0, the rear motor has the trackslip trend.

Recommended value ranges of the preset thresholds are mentioned in the present disclosure. Optional ranges of the thresholds are provided in the following comparison table for reference.

| Preset threshold | Physical meaning | Recommended value range |
|---|---|---|
| A1 and A2 | Motor rotating speed **SpdDivid** | 1 to 3, and A1<A2 |
| B1 and B2 | Motor torque ratio **TorDivid** | 1 to 2, and B1<B2 |
| C0 | Minimum rotating speeds of the front motor and the rear motor | 50 to 100 |
| C1, C3, C5, C6, and C10 | Motor angular acceleration ratio **SpdDerivDivid** | 1 to 3 |
| C2, C4, C7, and C9 | Motor angular acceleration ratio/motor torque ratio threshold **SpdTorqDivid** | 1 to 2.5 |
| C3 and C8 | Motor rotating speed ratio SpdDivid | 1 to 3 |

The present disclosure further provides a method for vehicle torque adjustment. The method for vehicle torque adjustment may be used to perform intervention and controlling on a vehicle when the vehicle has a trackslip trend during driving of the vehicle, thereby effectively suppressing a drive wheel trackslip phenomenon that occurs when the vehicle starts up or accelerates in complex operating situations such as a low-adhesion road and a separated road, so that the vehicle acquires good ground friction, and stability and driving comfort of the vehicle are improved.

As shown in FIG. 2, the present disclosure provides a method for vehicle torque adjustment. The method for vehicle torque adjustment includes the following steps.

S201: By using the method for vehicle trackslip identification in any one of the foregoing embodiments, it is determined whether the drive motor corresponding to the first rotating speed has the trackslip trend.

S202: If the drive motor corresponding to the first rotating speed has the trackslip trend, a torque output value of the drive motor corresponding to the first rotating speed is reduced.

In this embodiment, Step S201 is to effectively suppress a vehicle trackslip phenomenon. By using the method for vehicle trackslip identification in any one of the foregoing embodiments, it is determined whether the drive motor corresponding to the first rotating speed has the trackslip trend. If the drive motor corresponding to the first rotating speed has the trackslip trend, in Step S202, the torque output value of the drive motor corresponding to the first rotating speed is reduced. The torque output value is reduced, and a power increase is reduced, so that the vehicle acquires good ground friction, and stability of the vehicle is improved.

In an embodiment, in Step S202, that a torque output value of the drive motor corresponding to the first rotating speed is reduced may mean that the torque output value of the drive motor corresponding to the first rotating speed is reduced to a negative torque. A torque output is greatly reduced until the negative torque is output, and the power is quickly reduced to deceleration, so that the vehicle acquires good ground friction, and stability of the vehicle is improved.

In another embodiment, in Step S202, that a torque output value of the drive motor corresponding to the first rotating speed is reduced may mean that the torque output value of the drive motor corresponding to the first rotating speed is reduced, and a torque output value of a drive motor corresponding to the second rotating speed is also increased. In the control manner, the torque output values of the two drive motors are cooperatively controlled, and balance is maintained through an increase or a decrease, so that a vehicle trackslip is controlled, and stability of the vehicle is maintained.

In an embodiment, in the method for vehicle torque adjustment, by using the method for vehicle trackslip identification in any one of the foregoing embodiments, an output torque at a moment when the drive motor corresponding to the first rotating speed has the trackslip trend is further recorded. The output torque is used as a maximum torque reference value under a current road adhesion condition. In this way, the torque output value of the drive motor corresponding to the first rotating speed is adjusted according to the maximum torque reference value, thereby providing a reference basis for a method for vehicle torque adjustment to be used for an entire vehicle control system.

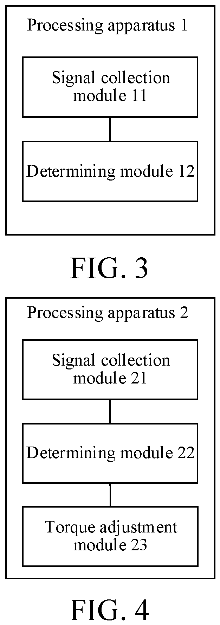

The present disclosure further provides a processing apparatus 1. The processing apparatus 1 uses the foregoing method for vehicle trackslip identification. The processing apparatus 1 can quickly identify a trackslip trend of a vehicle based on changes in rotating speeds and torques of motors during driving of the vehicle, thereby improving real-time performance and accuracy of identification. In addition, there is no need to add an additional sensor. As shown in FIG. 3, the processing apparatus 1 includes the following modules.

A signal collection module 11 is configured to at least acquire rotating speeds of two drive motors of a vehicle.

A determining module 12 acquires a rotating speed ratio and an angular acceleration ratio, and determines a trackslip trend of a drive motor corresponding to a first rotating speed according to at least the rotating speed ratio and the angular acceleration ratio.

In the processing apparatus 1 provided in the present disclosure, the signal collection module 11 acquires the rotating speeds of the two drive motors of the vehicle; and the determining module 12 acquires the rotating speed ratio and the angular acceleration ratio, and determines the trackslip trend of the drive motor corresponding to the first rotating speed according to the acquired rotating speed ratio and angular acceleration ratio.

The present disclosure further provides a processing apparatus 2. The processing apparatus 2 uses the foregoing method for vehicle torque adjustment. The processing apparatus 2 can be used to perform timely intervention and controlling on a vehicle based on a vehicle trackslip identification result, thereby effectively suppressing a drive wheel trackslip phenomenon that occurs when the vehicle starts up or accelerates in complex operating situations such as a low-adhesion road and a separated road, so that the vehicle acquires good ground friction, and stability and driving comfort of the vehicle are improved. As shown in FIG. 4, the processing apparatus 2 includes the following modules.

A signal collection module 21 is configured to at least acquire rotating speeds of two drive motors of a vehicle.

A determining module 22 acquires a rotating speed ratio and an angular acceleration ratio, and determines a trackslip trend of a drive motor corresponding to a first rotating speed according to at least the rotating speed ratio and the angular acceleration ratio.

A torque adjustment module 23 is configured to reduce a torque output value of the drive motor corresponding to the first rotating speed.

In the processing apparatus 2 provided in the present disclosure, the signal collection module 21 is configured to acquire the rotating speeds of the two drive motors of the vehicle; the determining module 22 acquires the rotating speed ratio and the angular acceleration ratio, and determines the trackslip trend of the drive motor corresponding to the first rotating speed according to at least the rotating speed ratio and the angular acceleration ratio; and finally, the torque adjustment module 23 is configured to reduce the torque output value of the drive motor corresponding to the first rotating speed.

The present disclosure further provides a vehicle. The vehicle includes the foregoing processing apparatus 2, configured to perform the foregoing method for vehicle torque adjustment. Alternatively, the vehicle includes the foregoing processing apparatus 1, configured to perform the foregoing method for vehicle trackslip identification.

The present disclosure further provides a computer-readable storage medium. The computer-readable storage medium stores computer programs. The computer programs, when executed, implement the foregoing method for vehicle trackslip identification. Alternatively, the computer programs, when executed, implement the foregoing method for vehicle torque adjustment.

The foregoing embodiments focus on differences between the embodiments. Different optimization features between the embodiments may be combined to form a better embodiment as long as they are not contradicted. In view of conciseness, details are not described herein again.

Although some specific embodiments of the present disclosure have been described in detail by way of examples, a person skilled in the art should understand that the foregoing examples are only for description and are not intended to limit the scope of the present disclosure. A person skilled in the art should appreciate that modifications may be made to the foregoing embodiments without departing from the scope and spirit of the present disclosure. The scope of the present disclosure is limited by only the appended claims.

## Claims

1. A method for vehicle trackslip identification, comprising:
acquiring rotating speeds of two drive motors of a vehicle, wherein a higher rotating speed is a first rotating speed, an angular acceleration corresponding to the higher rotating speed is a first angular acceleration, a lower rotating speed is a second rotating speed, and an angular acceleration corresponding to the lower rotating speed is a second angular acceleration; and
determining, if the first angular acceleration is greater than 0, a trackslip trend of a drive motor corresponding to the first rotating speed according to at least the first rotating speed, the second rotating speed, the first angular acceleration, and the second angular acceleration.

2. The method for vehicle trackslip identification according to claim **1,** wherein the determining a trackslip trend of a drive motor corresponding to the first rotating speed according to at least the first rotating speed, the second rotating speed, the first angular acceleration, and the second angular acceleration comprises:
calculating a ratio of the first rotating speed to the second rotating speed as a rotating speed ratio, and calculating an absolute value of a ratio of the first angular acceleration to the second angular acceleration as an angular acceleration ratio; and
determining the trackslip trend of the drive motor corresponding to the first rotating speed according to at least the rotating speed ratio and the angular acceleration ratio.

3. The method for vehicle trackslip identification according to claim 1 or 2, wherein the determining the trackslip trend of the drive motor corresponding to the first rotating speed according to at least the rotating speed ratio and the angular acceleration ratio comprises:
determining the trackslip trend of the drive motor corresponding to the first rotating speed according to at least whether the rotating speed ratio exceeds a preset rotating speed ratio threshold range and whether the angular acceleration ratio exceeds a preset angular acceleration ratio threshold range.

4. The method for vehicle trackslip identification according to any one of claims 1 to 3, further comprising: acquiring torques of the two drive motors of the vehicle, a torque corresponding to the first rotating speed being a first torque, and a torque corresponding to the second rotating speed being a second torque; and
determining the trackslip trend of the drive motor corresponding to the first rotating speed based on a relationship between the first torque and the second torque.

5. The method for vehicle trackslip identification according to any one of claims 1 to 4, wherein if the first torque is greater than the second torque, the rotating speed ratio exceeds the rotating speed ratio threshold range, and the angular acceleration ratio exceeds the angular acceleration ratio threshold range, it is determined that the drive motor corresponding to the first rotating speed has the trackslip trend.

6. The method for vehicle trackslip identification according to any one of claims 1 to 4, wherein if the second torque is greater than the first torque, a ratio of the second torque to the first torque is a torque ratio; and
if a ratio of the angular acceleration ratio to the torque ratio exceeds an angular acceleration torque ratio threshold range and the rotating speed ratio exceeds the rotating speed ratio threshold range, it is determined that the drive motor corresponding to the first rotating speed has the trackslip trend.

7. The method for vehicle trackslip identification according to any one of claims 1 to 4, wherein if the first torque is greater than the second torque, a ratio of the first torque to the second torque is a torque ratio, or if the second torque is greater than the first torque, a ratio of the second torque to the first torque is a torque ratio; and
if the torque ratio falls within a torque ratio threshold range and the rotating speed ratio exceeds the rotating speed ratio threshold range, the trackslip trend of the drive motor corresponding to the first rotating speed is determined based on a ratio of the angular acceleration ratio to the torque ratio.

8. The method for vehicle trackslip identification according to any one of claims 1 to 7, wherein if the ratio of the angular acceleration ratio to the torque ratio exceeds the angular acceleration torque ratio threshold range, it is determined that the drive motor corresponding to the first rotating speed has the trackslip trend.

9. The method for vehicle trackslip identification according to any one of claims 1 to 8, further comprising: acquiring the first rotating speed and the second rotating speed through a motor resolver sensor.

10. A method for vehicle torque adjustment, comprising:
determining, by using the method for vehicle trackslip identification according to any one of claims 1 to 9, whether the drive motor corresponding to the first rotating speed has the trackslip trend; and
reducing a torque output value of the drive motor corresponding to the first rotating speed if the drive motor corresponding to the first rotating speed has the trackslip trend.

11. The method for vehicle torque adjustment according to any one of claims 1 to 10, wherein the reducing a torque output value of the drive motor corresponding to the first rotating speed comprises:
reducing the torque output value of the drive motor corresponding to the first rotating speed to a negative torque.

12. The method for vehicle torque adjustment according to any one of claims 1 to 10, wherein the reducing a torque output value of the drive motor corresponding to the first rotating speed comprises:
reducing the torque output value of the drive motor corresponding to the first rotating speed, and increasing a torque output value of a drive motor corresponding to the second rotating speed.

13. The method for vehicle torque adjustment according to any one of claims 1 to 10, further comprising: recording, by using the method for vehicle trackslip identification according to any one of claims 1 to 9, an output torque at a moment when the drive motor corresponding to the first rotating speed has the trackslip trend, the output torque being used as a maximum torque reference value under a current road adhesion condition; and
adjusting the torque output value of the drive motor corresponding to the first rotating speed according to the maximum torque reference value.

14. A processing apparatus using the method for vehicle trackslip identification according to any one of claims 1 to 9, comprising:
a signal collection module, configured to at least acquire rotating speeds of two drive motors of a vehicle; and
a determining module, acquiring a rotating speed ratio and an angular acceleration ratio, and determining a trackslip trend of a drive motor corresponding to a first rotating speed according to at least the rotating speed ratio and the angular acceleration ratio.

15. A processing apparatus using the method for vehicle torque adjustment according to any one of claims 10 to 13, comprising:
a signal collection module, configured to at least acquire rotating speeds of two drive motors of a vehicle;
a determining module, acquiring a rotating speed ratio and an angular acceleration ratio, and determining a trackslip trend of a drive motor corresponding to a first rotating speed according to at least the rotating speed ratio and the angular acceleration ratio; and
a torque adjustment module, configured to reduce a torque output value of the drive motor corresponding to the first rotating speed.

16. A vehicle, comprising the processing apparatus according to claim 15, configured to perform the method for vehicle torque adjustment according to any one of claims 10 to 13; or
comprising the processing apparatus according to claim 14, configured to perform the method for vehicle trackslip identification according to any one of claims 1 to 9.

17. A computer-readable storage medium, storing computer programs, wherein the computer programs, when executed, implement the method for vehicle trackslip identification according to any one of claims 1 to 9; or
the computer programs, when executed, implement the method for vehicle torque adjustment according to any one of claims 10 to 13.
